# FASCICULE DE BREVET EUROPEEN

(11) **EP 3 850 728 B1**
(45) Date de publication et mention de la délivrance du brevet: **21.10.2026**
(21) Numéro de dépôt: 19742070.6
(22) Date de dépôt: 24.07.2019
(51) Int. Cl.: H02K 7/00

(54) **MACHINE ÉLECTRIQUE TOURNANTE MUNIE D'AU MOINS UNE GORGE DE RÉSERVE DE LUBRIFIANT**
ROTIERENDE ELEKTRISCHE MASCHINE MIT MINDESTENS EINER SCHMIERMITTELSPEICHERNUT
ROTATING ELECTRICAL MACHINE PROVIDED WITH AT LEAST ONE LUBRICANT STORAGE GROOVE

(30) Priorité: 14.09.2018 FR 1858312
(43) Date de publication de la demande: 21.07.2021
(73) Titulaire: Valeo Electrification, 95800 Cergy (FR)
(72) Inventeur: LEDIEU, Cédric, 94046 CRETEIL CEDEX (FR); THILAGANATHAN, Arun, 94046 CRETEIL CEDEX (FR); ROUIS, Oussama, 94046 CRETEIL CEDEX (FR)
(74) Mandataire: Valeo Powertrain Systems
(86) Numéro de dépôt international: PCT/EP2019/069933
(87) Numéro de publication internationale: WO 2020/052847

(56) Documents cités:
- EP-A1- 3 850 235
- CN-U- 203 189 487
- CN-U- 205 190 721
- CN-U- 206 175 503
- FR-A1- 3 038 793
- FR-A1- 3 056 840

## Description

La présente invention porte sur une machine électrique tournante munie d'au moins une gorge de réserve de lubrifiant. L'invention trouve une application particulièrement avantageuse, mais non exclusive, avec les machines électriques réversibles de forte puissance pouvant fonctionner en mode alternateur et en mode moteur accouplées avec un élément réducteur.

De façon connue en soi, les machines électriques tournantes comportent un stator et un rotor solidaire d'un arbre. Le stator est monté dans un carter configuré pour porter à rotation l'arbre sur des paliers par l'intermédiaire de roulements. FR 3 056 840 A1 divulgue une machine électrique. CN 206 175 503 U divulgue une structure de lubrification de cannelures comportant une gorge annulaire.

Le rotor comporte un corps formé par un empilage de feuilles de tôles maintenues sous forme de paquet au moyen d'un système de fixation adapté. Le rotor comporte des pôles formés par exemple par des aimants permanents logés dans des cavités ménagées dans la masse magnétique du rotor. Alternativement, dans une architecture dite à pôles "saillants", les pôles sont formés par des bobines enroulées autour de bras du rotor.

Par ailleurs, le stator comporte un corps constitué par un empilage de tôles minces formant une couronne, dont la face intérieure est pourvue d'encoches ouvertes vers l'intérieur pour recevoir un bobinage. Le bobinage est obtenu par exemple à partir d'un fil continu recouvert d'émail ou à partir d'éléments conducteurs en forme d'épingles reliées entre elles par soudage. Le bobinage comporte des enroulements de phase connectés en étoile ou en triangle dont les sorties sont reliées à un module électronique de commande.

Dans certains types de chaînes de traction de véhicule automobile assurant la transmission de la puissance mécanique du moteur thermique vers les roues du véhicule, une machine électrique tournante réversible de forte puissance peut être accouplée, via une pièce de liaison, à un élément réducteur. L'élément réducteur peut prendre la forme d'une boîte de vitesses du véhicule ou d'un réducteur monté sur un train du véhicule et accouplé à la machine électrique tournante.

La machine électrique tournante est apte à fonctionner dans un mode alternateur pour fournir notamment de l'énergie à la batterie et au réseau de bord du véhicule, et dans un mode moteur, pour assurer le démarrage du moteur thermique, et/ou pour participer à la traction du véhicule seule ou en combinaison avec le moteur thermique.

Afin de réaliser une liaison mécanique entre une machine électrique et la pièce de liaison reliée à l'élément réducteur, des cannelures d'accouplement de l'arbre de la machine électrique sont enduites d'un lubrifiant. Or, on s'est aperçu qu'après quelques cycles de fonctionnement, le lubrifiant s'évacue et des bruits parasites apparaissent. En outre, lors du démontage de l'ensemble, des points de corrosion ou des usures prématurées sont observés sur les cannelures des différentes pièces.

La présente invention vise à remédier efficacement à ces inconvénients en proposant un ensemble pour véhicule automobile selon la revendication 1.

L'invention permet ainsi d'augmenter la durée de vie des cannelures de l'arbre et de la pièce de liaison en limitant les frottements acier/acier. L'invention permet également de réduire le bruit mécanique entre les cannelures. En outre, l'invention évite la corrosion des pièces tout en garantissant un démontage facile, et ce même après un certain nombre de cycles de fonctionnement.

Selon l'invention la gorge est ménagée dans l'extrémité de l'arbre.

Selon une réalisation, la gorge présente une orientation différente de celle de l'orientation des cannelures de l'extrémité de l'arbre.

Selon une réalisation, la gorge s'étend dans un plan orthogonal par rapport à un axe de l'arbre.

Selon une réalisation, la gorge s'étend dans un plan formant un angle non nul par rapport à un plan orthogonal à un axe de l'arbre.

Selon une réalisation, ledit comporte plusieurs gorges ménagées dans l'arbre.

Selon une réalisation, une profondeur et/ou une largeur de la gorge est supérieure à celle à celle d'un espace entre deux dents de cannelures.

Selon une réalisation, la gorge comporte un trou traversant.

Selon une réalisation, l'élément réducteur est une boîte de vitesses de véhicule automobile.

Selon une réalisation, l'élément réducteur est un réducteur monté sur un train du véhicule et accouplé à la machine électrique tournante.

L'invention a également pour objet un véhicule automobile caractérisé en ce qu'il comporte un ensemble tel que précédemment défini.

L'invention sera mieux comprise à la lecture de la description qui suit et à l'examen des figures qui l'accompagnent. Ces figures ne sont données qu'à titre illustratif mais nullement limitatif de l'invention.
La figure 1 est une vue en perspective d'une machine électrique tournante selon la présente invention;
La figure 2 est une vue en coupe longitudinale de la machine électrique tournante selon l'invention;
La figure 3 est une vue en coupe de la liaison mécanique entre une pièce de liaison d'un élément réducteur et l'extrémité avant d'un arbre de la machine électrique tournante selon l'invention;
Les figures 4a à 4c sont des vues en perspective de l'extrémité avant de l'arbre de la machine électrique tournante selon l'invention illustrant différentes configurations des gorges de réserve de lubrifiant.

Les éléments identiques, similaires, ou analogues, conservent la même référence d'une figure à l'autre.

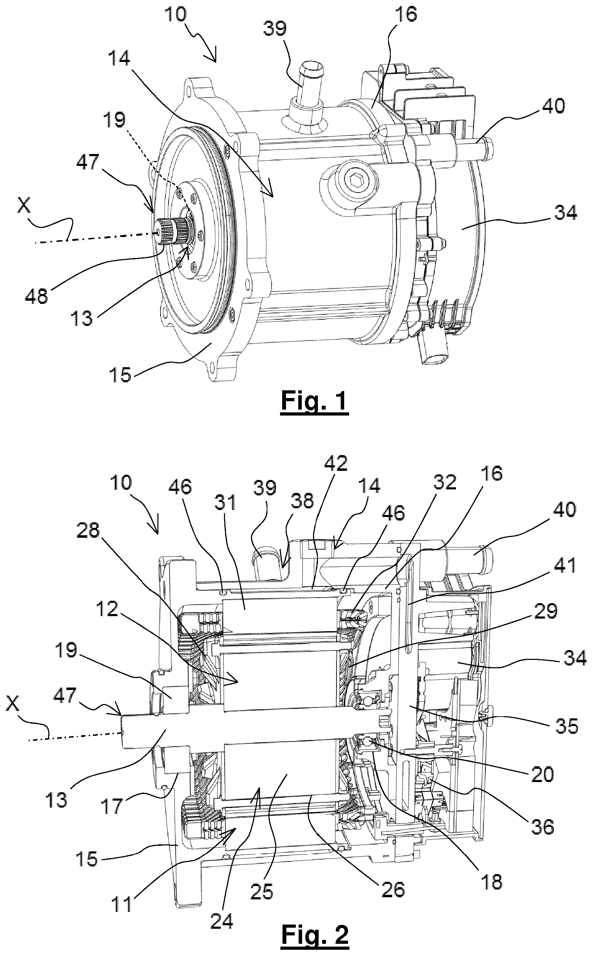

Dans la suite de la description, on considère une orientation d'avant vers l'arrière, une orientation allant de gauche à droite sur les figures 1 et 2. Ainsi, on entend par un élément "avant", un élément situé du côté du roulement avant 19 et par élément "arrière" un élément situé du côté opposé, c'est-à-dire du côté du module électronique de commande 34.

Les figures 1 et 2 montrent une machine électrique tournante 10 comportant un stator 11 polyphasé entourant un rotor 12 monté sur un arbre 13 d'axe X correspondant à l'axe de la machine électrique 10. Le stator 11 entoure le rotor 12 avec présence d'un entrefer entre la périphérie interne du stator 11 et la périphérie externe du rotor 12. Le stator 11 est monté dans un carter 14 comportant un palier avant 15 et un palier arrière 16. Le palier avant 15 et le palier arrière 16 comportent chacun un logement de réception 17, 18 d'un roulement 19, 20 correspondant qui assure un guidage en rotation de l'arbre 13.

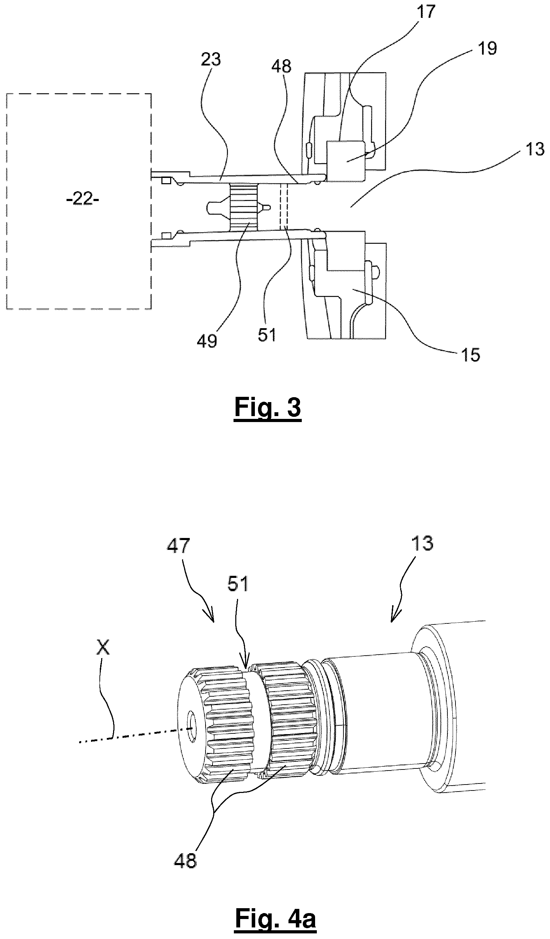

Cette machine électrique 10 est destinée à être accouplée à un élément réducteur de vitesse 22 via une pièce de liaison 23 visible en figure 3. L'élément réducteur 22 pourra prendre la forme d'une boîte de vitesses de véhicule automobile ou d'un réducteur monté sur un train du véhicule et accouplé à la machine électrique tournante 10.

La machine électrique 10 est apte à fonctionner dans un mode alternateur pour fournir notamment de l'énergie à la batterie et au réseau de bord du véhicule, et dans un mode moteur, pour assurer le démarrage du moteur thermique du véhicule, et le cas échéant pour participer à la traction du véhicule seule ou en combinaison avec le moteur thermique. La puissance de la machine pourra par exemple être comprise entre 15kW et 50kW.

Plus précisément, le rotor 12 comporte un corps 24 sous la forme d'un paquet de tôles. Des aimants permanents 25 sont implantés dans des cavités 26 du corps 24. Les aimants 25 pourront être en terre rare ou en ferrite selon les applications et la puissance recherchée de la machine.

En outre, le rotor 12 comporte deux flasques 28, 29 plaqués chacun contre une face d'extrémité axiale du rotor 12. Ces flasques 28, 29 assurent une retenue axiale des aimants et servent également à équilibrer le rotor 12.

Par ailleurs, le stator 11 comporte un corps 31 constitué par un paquet de tôles ainsi qu'un bobinage 32. Le corps 31 est formé par un empilement de feuilles de tôles maintenues sous forme de paquet au moyen d'un système de fixation adapté, tel que des rivets.

Le corps de stator 11 est muni de dents délimitant des encoches pour le montage du bobinage 32. Le bobinage 32 comporte un ensemble d'enroulements de phase traversant les encoches et formant des chignons s'étendant en saillie de part et d'autre du corps de stator 11. Le bobinage 32 est obtenu ici à partir d'éléments conducteurs en forme d'épingles reliés entre eux par exemple par soudage. Le bobinage 32 comporte des enroulements de phase de type double triphasés connectés en étoile et/ou en triangle. Des sorties de phase sont destinées à être reliées à un module électronique de commande 34.

Le module électronique de commande 34 comporte un dissipateur thermique 35 sur lequel sont fixés notamment des modules de puissance 36, par exemple par vissage. Ces modules de puissance 36 intègrent de façon connue en soi des interrupteurs, prenant par exemple la forme de transistors de type MOS, permettant d'assurer une commande des phases de la machine électrique tournante 10 en mode moteur ou en mode alternateur. La commutation de ces transistors est pilotée par une unité de contrôle. Le module électronique de commande 34 est monté plaqué, via le dissipateur thermique 35, contre la face arrière d'une paroi transversale du palier arrière 16.

Avantageusement, la machine électrique 10 comporte un circuit de refroidissement 38 ayant une entrée 39 et d'une sortie 40 de liquide de refroidissement, tel qu'un liquide à base d'eau ou d'huile. Le circuit de refroidissement 38 présente une chambre de refroidissement 41 ménagée dans la masse du dissipateur thermique 35 et une chambre de refroidissement 42 entourant le stator 11.

La chambre de refroidissement 42 est délimitée par la périphérie externe d'une paroi annulaire du palier avant 15 et la périphérie interne d'une paroi annulaire du palier arrière 16. Cette chambre de refroidissement 42 est fermée à ses extrémités axiales par deux joints 46 de type torique. Le stator 11 est monté fretté à l'intérieur du palier avant 15 de manière à établir un contact intime entre la périphérie externe du corps de stator 11 et la périphérie interne de la paroi latérale du palier avant 15.

Comme on peut le voir sur la figure 3, une extrémité avant 47 de l'arbre 13 dépassant axialement par rapport au roulement est pourvue de cannelures 48, ici d'orientation axiale par rapport à l'axe X. Les cannelures 48 de l'extrémité de l'arbre 13 coopèrent avec des cannelures complémentaires 49 de la pièce de liaison 23. Les cannelures 49 sont ménagées dans une périphérie interne de la pièce de liaison 23 de forme annulaire et d'orientation axiale. Ainsi les dents des cannelures 48, 49 d'une des éléments pénètrent dans les espaces séparant les dents des cannelures 48, 49 de l'autre élément et inversement. Cela permet d'assurer une liaison mécanique en rotation entre l'arbre 13 et la pièce de liaison 23. La pièce de liaison 23 est également liée en rotation avec l'élément réducteur 22, notamment par une liaison à cannelures.

On prévoit au moins une gorge 51 distincte des cannelures 48 de l'extrémité de l'arbre 13 et distincte des cannelures complémentaires 49 de la pièce de liaison 23 pour recevoir une réserve de lubrifiant, notamment de la graisse. Cette réserve de lubrifiant vise à assurer une lubrification entre l'extrémité de l'arbre 13 et la pièce de liaison 23.

Comme on peut le voir sur la figure 4a, la gorge 51 est ménagée dans l'extrémité de l'arbre 13. La gorge 51, avantageusement de forme annulaire, présente une orientation différente de celle de l'orientation des cannelures 48 de l'extrémité de l'arbre 13. La gorge 51 est par exemple constituée par une creusure de l'arbre 13. Une profondeur et/ou une largeur d'une gorge 51 est supérieure à celle d'un espace entre deux dents de cannelures 48. En variante, la gorge 51 est ménagée dans la périphérie interne de la pièce de liaison 23.

De préférence, on prévoit plusieurs gorges 51 notamment deux ou trois. Le nombre de gorges 51 ainsi que leurs dimensions sont choisis de façon à obtenir un bon compromis entre la quantité de lubrifiant stockée dans les gorges 51 et la rigidité mécanique de la liaison entre l'arbre 13 et la pièce de liaison 23.

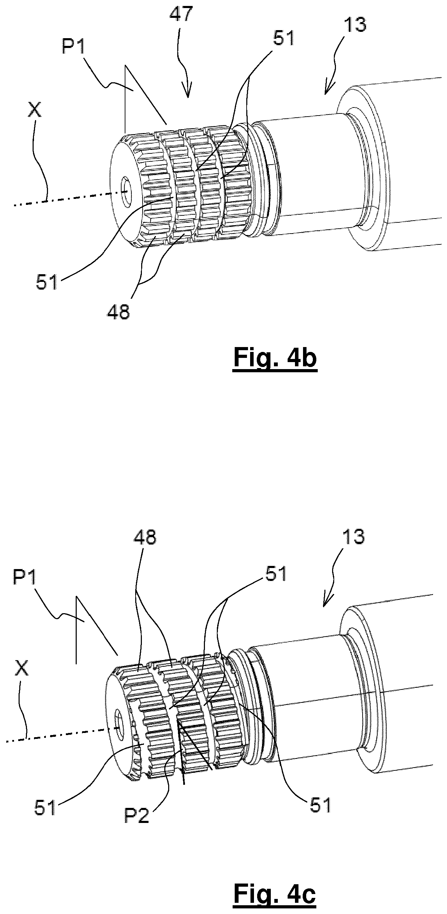

Dans le mode de réalisation de la figure 4b, les gorges 51 s'étendent chacune dans un plan orthogonal P1 par rapport à l'axe X de l'arbre 13, comme la gorge de la figure 4a. Les gorges 51 sont parallèles les unes par rapport aux autres.

Dans le mode de réalisation de la figure 4c, les gorges 51 s'étendent chacune dans un plan P2 correspondant formant un angle non nul par rapport à un plan P1 orthogonal à l'axe X de l'arbre 13.

En variante, la gorge 51 pourra comporter un trou traversant, par exemple pour être en communication avec un réservoir de lubrifiant.

En variante, la gorge 51 présente une forme hélicoïdale.

Bien entendu, la description qui précède a été donnée à titre d'exemple uniquement et ne limite pas le domaine de l'invention**.**

## Revendications

1. Ensemble pour véhicule automobile comportant:
- une machine électrique tournante (10) comprenant:
- un arbre (13),
- un rotor (12) monté sur l'arbre (13),
- un stator (11), notamment entourant le rotor (12),
- un palier avant (15) comportant un logement de réception (17) d'un roulement (19) assurant un guidage en rotation de l'arbre (13),
- l'arbre (13) comportant une extrémité dépassant axialement par rapport au roulement (19), l'extrémité de l'arbre (13) étant pourvue de cannelures (48), et
- une pièce de liaison (23) accouplant la machine électrique à un réducteur de vitesse (22) et comportant des cannelures complémentaires (49) destinées à coopérer avec les cannelures (48) de l'extrémité de l'arbre (13) pour assurer une liaison mécanique entre l'arbre (13) et la pièce de liaison (23),
**caractérisé en ce que** l'ensemble comporte au moins une gorge (51) distincte et entre des cannelures (48) de l'extrémité de l'arbre (13) et distincte des cannelures complémentaires (49) de la pièce de liaison (23) pour recevoir une réserve de lubrifiant de manière à assurer une lubrification entre l'extrémité de l'arbre (13) et la pièce de liaison (23) et **en ce que** la gorge (51) est ménagée dans l'extrémité de l'arbre (13).

2. Ensemble selon la revendication 1, **caractérisé en ce que** la gorge (51) présente une orientation différente de celle de l'orientation des cannelures (48) de l'extrémité de l'arbre (13).

3. Ensemble selon l'une quelconque des revendications 1 et 2, **caractérisé en ce que** la gorge (51) s'étend dans un plan orthogonal (P1) par rapport à un axe de l'arbre (13).

4. Ensemble selon l'une quelconque des revendications 1 et 2, **caractérisé en ce que** la gorge (51) s'étend dans un plan (P2) formant un angle non nul par rapport à un plan (P1) orthogonal à un axe de l'arbre (13).

5. Ensemble selon l'une quelconque des revendications 1 à 4, **caractérisé en ce qu'**il comporte plusieurs gorges (51) ménagées dans l'arbre (13).

6. Ensemble selon l'une quelconque des revendications 1 à 5, **caractérisé en ce qu'**une profondeur et/ou une largeur de la gorge (51) est supérieure à celle à celle d'un espace entre deux dents de cannelures (48).

7. Ensemble selon l'une quelconque des revendications 1 à 6, **caractérisé en ce que** la gorge (51) comporte un trou traversant.

8. Ensemble selon l'une quelconque des revendications 1 à 7, **caractérisé en ce que** l'élément réducteur (22) est une boîte de vitesses de véhicule automobile.

9. Ensemble selon l'une quelconque des revendications 1 à 8, **caractérisé en ce que** l'élément réducteur (22) est un réducteur monté sur un train du véhicule et accouplé à la machine électrique tournante.

10. Véhicule automobile **caractérisé en ce qu'**il comporte un ensemble tel que défini selon l'une quelconque des revendications précédentes.

## Patentansprüche

1. Anordnung für ein Kraftfahrzeug, umfassend:
- eine rotierende elektrische Maschine (10), die umfasst:
- eine Welle (13),
- einen auf der Welle (13) montierten Rotor (12),
- einen Stator (11), der insbesondere den Rotor (12) umgibt,
- ein vorderes Lager (15) mit einer Aufnahme (17) für ein Wälzlager (19), das eine Drehlagerung der Welle (13) gewährleistet,
- wobei die Welle (13) ein Ende aufweist, das axial über das Wälzlager (19) hinausragt, wobei das Ende der Welle (13) mit Verzahnungen (48) versehen ist, und
- ein Verbindungsstück (23), das die elektrische Maschine mit einem Geschwindigkeitsreduzierer (22) koppelt und komplementäre Verzahnungen (49) aufweist, die dazu bestimmt sind, mit den Verzahnungen (48) des Endes der Welle (13) zusammenzuwirken, um eine mechanische Verbindung zwischen der Welle (13) und dem Verbindungsstück (23) zu gewährleisten, **dadurch gekennzeichnet, dass** die Anordnung mindestens eine Nut (51) aufweist, die von den Verzahnungen (48) des Endes der Welle (13) getrennt und zwischen diesen angeordnet ist und von den komplementären Verzahnungen (49) des Verbindungsstücks (23) getrennt ist, um einen Schmiermittelvorrat aufzunehmen, so dass eine Schmierung zwischen dem Ende der Welle (13) und dem Verbindungsstück (23) gewährleistet ist, und dass die Nut (51) in dem Ende der Welle (13) ausgebildet ist.

2. Anordnung nach Anspruch 1, **dadurch gekennzeichnet, dass** die Nut (51) eine Ausrichtung aufweist, die sich von der Ausrichtung der Verzahnungen (48) des Endes der Welle (13) unterscheidet.

3. Anordnung nach einem der Ansprüche 1 und 2, **dadurch gekennzeichnet, dass** sich die Nut (51) in einer orthogonalen Ebene (P1) bezüglich einer Achse der Welle (13) erstreckt.

4. Anordnung nach einem der Ansprüche 1 und 2, **dadurch gekennzeichnet, dass** sich die Nut (51) in einer Ebene (P2) erstreckt, die einen von null verschiedenen Winkel gegenüber einer zur Achse der Welle (13) orthogonalen Ebene (P1) bildet.

5. Anordnung nach einem der Ansprüche 1 bis 4, **dadurch gekennzeichnet, dass** sie mehrere in der Welle (13) ausgebildete Nuten (51) aufweist.

6. Anordnung nach einem der Ansprüche 1 bis 5, **dadurch gekennzeichnet, dass** eine Tiefe und/oder eine Breite der Nut (51) größer ist als die eines Zwischenraums zwischen zwei Verzahnungszähnen (48).

7. Anordnung nach einem der Ansprüche 1 bis 6, **dadurch gekennzeichnet, dass** die Nut (51) eine Durchgangsbohrung aufweist.

8. Anordnung nach einem der Ansprüche 1 bis 7, **dadurch gekennzeichnet, dass** das Reduzierelement (22) ein Kraftfahrzeuggetriebe ist.

9. Anordnung nach einem der Ansprüche 1 bis 8, **dadurch gekennzeichnet, dass** das Reduzierelement (22) ein an einem Fahrzeugachsaggregat montierter und mit der rotierenden elektrischen Maschine gekoppelter Reduzierer ist.

10. Kraftfahrzeug, **dadurch gekennzeichnet, dass** es eine Anordnung umfasst, wie sie nach einem der vorhergehenden Ansprüche definiert ist.

## Claims

1. Assembly for a motor vehicle comprising:
- a rotating electrical machine (10) comprising:
- a shaft (13),
- a rotor (12) mounted on the shaft (13),
- a stator (11), in particular surrounding the rotor (12),
- a front bearing (15) comprising a housing (17) for receiving a bearing (19) ensuring rotational guidance of the shaft (13),
- the shaft (13) comprising an end projecting axially with respect to the bearing (19), the end of the shaft (13) being provided with splines (48), and
- a connecting piece (23) coupling the electrical machine to a speed reducer (22) and comprising complementary splines (49) intended to cooperate with the splines (48) of the end of the shaft (13) to ensure a mechanical connection between the shaft (13) and the connecting piece (23), **characterized in that** the assembly comprises at least one groove (51) that is distinct from and located between the splines (48) of the end of the shaft (13) and distinct from the complementary splines (49) of the connecting piece (23) to receive a lubricant reserve so as to ensure lubrication between the end of the shaft (13) and the connecting piece (23), and **in that** the groove (51) is formed in the end of the shaft (13).

2. Assembly according to claim 1, **characterized in that** the groove (51) has an orientation different from that of the orientation of the splines (48) of the end of the shaft (13).

3. Assembly according to any one of claims 1 and 2, **characterized in that** the groove (51) extends in a plane (P1) orthogonal to an axis of the shaft (13).

4. Assembly according to any one of claims 1 and 2, **characterized in that** the groove (51) extends in a plane (P2) forming a non-zero angle with respect to a plane (P1) orthogonal to an axis of the shaft (13).

5. Assembly according to any one of claims 1 to 4, **characterized in that** it comprises a plurality of grooves (51) formed in the shaft (13).

6. Assembly according to any one of claims 1 to 5, **characterized in that** a depth and/or a width of the groove (51) is greater than that of a space between two spline teeth (48).

7. Assembly according to any one of claims 1 to 6, **characterized in that** the groove (51) comprises a through hole.

8. Assembly according to any one of claims 1 to 7, **characterized in that** the reduction element (22) is a motor vehicle gearbox.

9. Assembly according to any one of claims 1 to 8, **characterized in that** the reduction element (22) is a reducer mounted on a vehicle axle and coupled to the rotating electrical machine.

10. Motor vehicle **characterized in that** it comprises an assembly as defined according to any one of the preceding claims.
